# FASCICULE DE BREVET EUROPEEN

(11) **EP 1 342 904 B1**
(45) Date de publication et mention de la délivrance du brevet: **28.06.2006**
(21) Numéro de dépôt: 03290448.4
(22) Date de dépôt: 26.02.2003
(51) Int. Cl.: F02K 7/10, F02K 9/64

(54) **Chambre de combustion pour statoréacteur et statoréacteur pourvu d'une telle chambre de combustion**
Brennkammer für ein Staustrahltriebwerk und Staustrahltriebwerk mit einer solchen Brennkammer
Combustion chamber for a ram-jet and ram-jet with such a combustion chamber

(30) Priorité: 04.03.2002 FR 0202685
(43) Date de publication de la demande: 10.09.2003
(73) Titulaire: EADS SPACE Transportation SAS, 75116 Paris (FR); MBDA France, 75116 Paris (FR)
(72) Inventeur: Bouchez, Marc, 18000 Bourges (FR); Falempin, François, 78730 St. Arnoult en Yvelines (FR)
(74) Mandataire: Bonnetat, Christian

(56) Documents cités:
- EP-A- 0 401 107
- EP-A- 0 604 279
- EP-A- 1 013 412
- WO-A-99/04156
- US-A- 3 279 194
- US-A- 4 170 110

## Description

La présente invention concerne les statoréacteurs et, plus spécialement, les statoréacteurs dits mixtes, c'est-à-dire ceux dans lesquels la combustion passe d'une vitesse subsonique à une vitesse supersonique dans la même chambre de combustion.

De tels statoréacteurs sont utilisés pour la propulsion d'aéronefs, tels que des missiles par exemple, et ils utilisent comme combustible un hydrocarbure jusqu'à une vitesse de vol de Mach 8 environ, puis de l'hydrogène à un nombre de Mach supérieur.

Les chambres de combustion de ces statoréacteurs mixtes sont soumises à des conditions de fonctionnement très sévères, puisqu'elles subissent des flux thermiques pouvant s'élever jusqu'à 10 MW/m². De tels flux thermiques, dans une section fermée comme celle d'une chambre de combustion, conduisent à des températures très élevées (supérieures à 2500°C) qu'aucun matériau d'emploi courant ne peut supporter, surtout sous quelques bars de pression et dans un flux de gaz chauds encore oxydants.

Par ailleurs, du point de vue de la performance du statoréacteur, plus le nombre de Mach de vol augmente, plus il est important de limiter les pertes thermiques à la paroi. Celles-ci représentent en effet une part de plus en plus grande de l'énergie dégagée par la combustion et réduisent donc sensiblement la poussée.

Toutes ces raisons conduisent à équiper la paroi des chambres de combustion des statoréacteurs mixtes avec des structures refroidies par circulation d'un fluide de refroidissement constitué par le combustible lui-même. L'énergie perdue par les gaz chauds dans la chambre au voisinage des parois est ainsi, pour une grande partie, captée par le combustible de refroidissement. Celui-ci s'échauffe, se décompose éventuellement et l'énergie qu'il a emmagasinée est restituée à l'écoulement propulsif lors de son injection comme combustible chaud dans ladite chambre. Dans le cas d'un hydrocarbure, la température et la nature des composés ainsi injectés peuvent faciliter en outre l'allumage et le processus de combustion.

Les solutions mises en oeuvre de façon connue (voir par exemple les documents FR-A-2 744 174, FR-A-2 782 378 et FR-A-2 774 432) pour un tel refroidissement régénératif de calories consistent à réaliser les structures refroidies sous forme de panneaux (métalliques la plupart du temps) équipés de canaux dans lesquels circule le combustible de refroidissement.

La réalisation de ces panneaux nécessite :
- l'usinage des canaux dans lesdits panneaux, et
- le brasage, le soudage, l'électrodéposition, la projection par plasma, ... d'une plaque sur lesdits panneaux pour fermer le circuit.

Dans le cas d'une structure métallique, la température de la paroi chaude ne doit pas dépasser 1000°C. De ce fait, compte tenu des flux thermiques en présence, et du débit de combustible imposé par les performances du statoréacteur et la mission de l'aéronef, il est nécessaire de disposer d'un système efficace et complexe :
- canaux de petites dimensions,
- espace inter-canal le moins grand possible pour limiter les ponts thermiques et les risques de point chauds,
- adjonction de barrière thermique supplémentaire,
- amélioration des échanges thermiques dans les canaux (rugosités, forme étudiée, obstacles, treillis composé de fils entremêlés, ...).

Etant donné leurs températures maximales admissibles plus élevées (environ 1800K), l'utilisation de matériaux composites thermostructuraux du type C/SiC ou C/C permet de réduire les flux thermiques à évacuer. Ces matériaux composites sont donc particulièrement intéressants à utiliser dans le cas où le débit ou les caractéristiques frigorifiques du combustible sont limitées. En effet, un hydrocarbure ne peut guère évacuer plus de 4 à 5 MJ/kg (à condition qu'il se décompose de façon endothermique, sinon il se limite à 1 MJ/kg) alors que l'hydrogène atteint une valeur de 15 MJ/kg.

Les marges liées à l'utilisation d'un matériau composite thermostructural permettent d'avoir une structure avec des canaux plus gros et éventuellement moins nombreux. Une telle technologie peut donc s'appliquer aux parois des différents constituants d'un statoréacteur mixte.

Cependant, dans tous les cas, la fabrication des canaux dans le matériau composite pose de nombreux problèmes, tels que :
- usinage assez difficile du carbure de silicium ;
- collage ou brasage d'une seconde plaque sur les canaux, avec des températures pouvant dépasser 1000°C et des pressions internes de 30 à 150 bars ;
- mise en place entre les mailles de la préforme composite de tuyaux, par exemple en tungstène, formant les canaux (cf. US-A-5 583 895).

Par ailleurs, les statoréacteurs mixtes n'ayant généralement pas une forme de révolution, mais étant au contraire prismatiques, et devant présenter une section de passage évolutive, il en résulte des difficultés supplémentaires liées à l'utilisation de canaux: pour bien refroidir les parois de largeur variable, un agencement particulier doit être défini, avec une évolution des largeurs, des espacements, du nombre des canaux. Un tel système, associant des canaux de géométrie variable et des affluents, est complexe à concevoir et à fabriquer.

En outre, l'assemblage étanche de panneaux pour constituer la structure prismatique de ces statoréacteurs soulève des difficultés techniques importantes.

Enfin, on remarquera que le document US-3 279 194 décrit un moteur de propulsion par réaction dans lequel du combustible est utilisé comme fluide de refroidissement de double-parois.

La présente invention a pour objet de remédier aux inconvénients mentionnés ci-dessus et elle concerne un statoréacteur de structure simple, pouvant être réalisé en une seule pièce, ou en un nombre limité de pièces, sans usinage de canaux pour circulation de fluide de refroidissement.

A cette fin, selon l'invention, le statoréacteur ayant un corps allongé comportant :
- à l'une des extrémités dudit corps, une entrée pour un flux de comburant ;
- en partie intermédiaire dudit corps, une chambre de combustion, qui est pourvue d'au moins un injecteur de combustible et dans le coeur de laquelle sont effectués le mélange comburant-combustible et la combustion dudit mélange, la paroi de ladite chambre de combustion étant constituée au moins en partie par une peau interne disposée du côté dudit coeur et par une peau externe espacée de ladite peau interne en ménageant avec elle un espace intermédiaire et ledit combustible alimentant ledit injecteur transitant, au moins en partie, par ledit espace intermédiaire pour refroidir ladite paroi ; et
- à l'autre extrémité dudit corps, une tuyère d'échappement canalisant les gaz de combustion sortant du coeur de ladite chambre de combustion,
est remarquable en ce que :
- ladite peau interne est réalisée au moins en partie en un matériau composite thermostructural, qui est poreux pour ledit combustible traversant ledit espace intermédiaire ; et
- la porosité de ladite peau interne est réglée pour que la proportion dudit combustible traversant ladite peau interne soit comprise entre 5% et 15% de la quantité totale de combustible apportée audit statoréacteur.

Ainsi, dans le statoréacteur de la présente invention, le combustible utilisé pour le refroidissement circule dans ledit espace intermédiaire, ce qui évite l'usinage de canaux dans la ou les parois correspondantes. De plus, une partie dudit combustible utilisé pour le refroidissement traverse ladite peau interne poreuse et passe dans le coeur de la chambre de combustion, où il participe à la combustion, tout comme le combustible injecté par les injecteurs. De plus, le combustible traversant la peau interne poreuse a pour effet d'écarter les gaz de combustion de cette peau interne et donc de réduire sensiblement la traînée de frottement desdits gaz de combustion contre ladite peau interne. II en résulte une sensible amélioration des performances du statoréacteur. Ainsi, dans le statoréacteur de la présente invention, le combustible utilisé pour le refroidissement non seulement récupère des calories de la combustion, mais encore améliore les performances dudit statoréacteur.

On remarquera que, dans le statoréacteur de la présente invention, on utilise les matériaux composites --à matrice carbone ou à matrice céramique-- non seulement pour leurs propriétés mécaniques et de résistance thermique bien connues, mais encore pour leur porosité intrinsèque, qui est généralement plutôt considérée comme un inconvénient, comme cela est décrit dans le document US-A-5 583 895.

Grâce aux excellentes propriétés mécaniques et de résistance thermique des matériaux composites, le statoréacteur conforme à la présente invention peut présenter une masse très réduite par rapport aux statoréacteurs métalliques connus. Grâce à la porosité de ces matériaux composites, on peut réaliser une peau poreuse simple, bien que présentant une grande résistance à la chaleur. De façon connue, la porosité de ladite peau peut être adaptée, à toute valeur désirée, lors de la densification de la matrice du matériau composite qui la constitue. Bien entendu, un tel ajustement de la porosité permet de régler la proportion de combustible de refroidissement qui traverse ladite peau interne poreuse pour abaisser la traînée de frottement à l'intérieur du coeur de la chambre de combustion.

De préférence, ladite peau externe est également constituée d'un matériau composite thermostructural. Dans ce cas, si cela se révèle nécessaire, ladite peau externe peut être rendue étanche aux liquides et aux gaz, par exemple par application d'un revêtement approprié.

Dans un mode de réalisation préféré, lesdites peaux interne et externe de matériau composite thermostructural sont reliées l'une à l'autre par une pluralité d'entretoises filiformes de matériau composite thermostructural traversant ledit espace intermédiaire, sans l'obturer.

Bien que le statoréacteur et la chambre de combustion conformes à la présente invention puissent présenter toutes formes désirées, par exemple de révolution autour d'un axe longitudinal, il est avantageux que :
- la chambre de combustion soit constituée d'une seule pièce de forme générale prismatique, dans laquelle les parois sont toutes solidaires les unes des autres et forment une surface fermée. Par exemple, ladite chambre de combustion comporte quatre parois deux à deux opposées, lui conférant une section fermée rectangulaire ; ou
- ladite chambre de combustion ait une forme générale prismatique et soit constituée de deux pièces, avec au moins l'une desdites parois mobile par rapport à l'ensemble des autres qui sont solidaires les unes des autres. Par exemple, ladite chambre de combustion comporte quatre parois deux à deux opposées, trois desdites parois étant solidaires les unes des autres en formant une goulotte à section en forme de U, tandis que la quatrième paroi est montée mobile à l'intérieur de ladite goulotte

Avantageusement, lesdites extrémités dudit corps de statoréacteur, formant respectivement l'entrée du flux de comburant et la tuyère d'échappement des gaz de combustion, sont constituées de matériau composite thermostructural et sont solidarisées de ladite chambre de combustion. Lesdites extrémités dudit corps de statoréacteur peuvent même ne former qu'une seule pièce de matériau composite thermostructural, dans laquelle est incorporée ladite chambre de combustion conforme à la présente invention.

Les figures du dessin annexé feront bien comprendre comment l'invention peut être réalisée. Sur ces figures, des références identiques désignent des éléments semblables.
La figure 1 montre, en vue en perspective schématique avec arrachement partiel, un exemple de réalisation du statoréacteur conforme à la présente invention.
La figure 2 est une vue en coupe longitudinale schématique suivant la ligne II-II de la figure 1.
La figure 3 est une vue en coupe transversale schématique suivant la ligne III-III de la figure 1.
La figure 4 est une vue en coupe schématique partielle, à échelle agrandie, de la paroi de la chambre de combustion du statoréacteur des figures 1 à 3, illustrant l'alimentation de ce dernier en combustible.
La figure 5 est un diagramme illustrant la variation de l'impulsion spécifique en fonction de la quantité de combustible passant à travers la peau interne de la chambre de combustion.
Les figures 6A à 6G illustrent schématiquement, sans souci d'échelle, un mode de réalisation de la chambre de combustion du statoréacteur des figures 1 à 3, les figures 6B à 6G correspondant à la ligne de coupe transversale T-T de la figure 6A.
Les figures 7A à 7D illustrent schématiquement, à plus grande échelle, les étapes de procédé permettant de passer de l'état de la figure 6E à l'état de la figure 6G, la figure 7A correspondant à la ligne de coupe VIIA-VIIA de la figure 6E et la figure 7D à la ligne de coupe VIID-VIID de la figure 6G. Sur ces figures 7A à 7D, à des fins de clarté, les deux tronçons de fil de chaque point de piquage sont représentés très espacés l'un de l'autre, mais il va de soi que, en réalité, ils sont proches l'un de l'autre.
Les figures 8 et 9 illustrent schématiquement, en coupe longitudinale et en coupe transversale, respectivement, un exemple de réalisation du statoréacteur des figures 1 à 3, après réalisation de la chambre de combustion conformément à la présente invention.
La figure 10 illustre schématiquement, en coupe transversale, une variante de réalisation de la chambre de combustion du statoréacteur conforme à la présente invention.

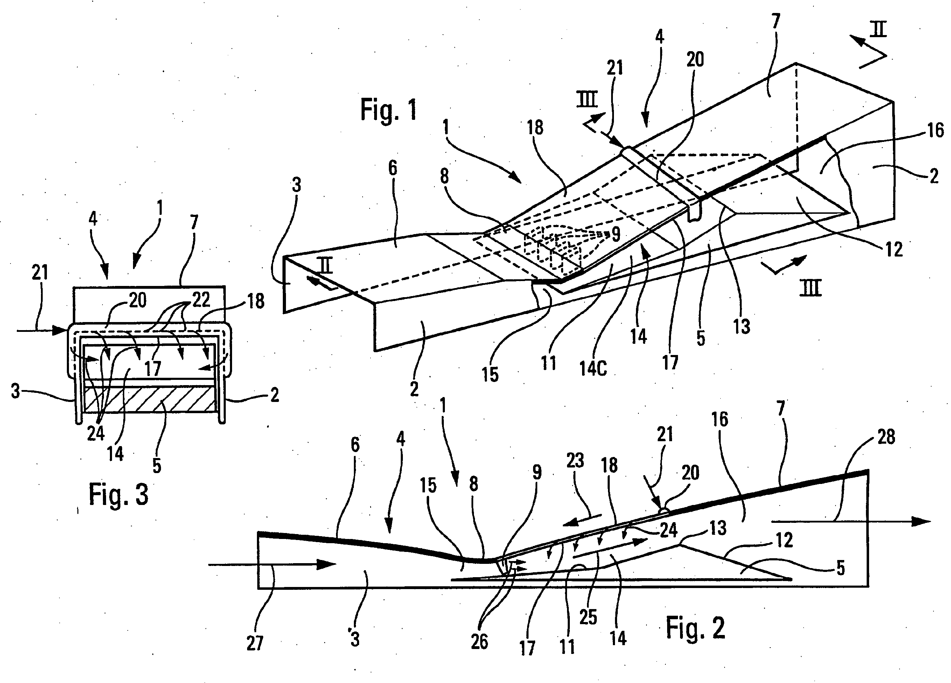

Le statoréacteur à géométrie variable pour aéronef, conforme à la présente invention et illustré schématiquement par les figures 1 à 3, comporte un corps de statoréacteur allongé 1 constitué de quatre parois 2 à 5, deux à deux opposées. Les deux parois latérales opposées 2 et 3 sont planes et parallèles entre elles.

La paroi supérieure 4 est solidaire des deux parois latérales 2 et 3 et l'ensemble des parois 2, 3 et 4 forme une goulotte renversée à section en U rectangulaire. La paroi supérieure 4 présente longitudinalement la forme générale d'un V ouvert à angle obtus. Elle comporte un flanc avant 6 et un flanc arrière 7, inclinés l'un par rapport à l'autre et reliés par une arête en pan coupé 8. Comme cela est illustré par les figures, les flancs avant 6 et arrière 7 peuvent chacun, en pratique, comporter des facettes légèrement inclinées les unes par rapport aux autres.

Des injecteurs de combustible 9 sont disposés au voisinage de l'arête 8, en étant suspendus à la paroi supérieure 4.

La paroi inférieure 5, dont la longueur est inférieure à la longueur de la paroi supérieure 4, présente également la forme générale d'un V ouvert à angle obtus. Elle est logée dans la goulotte formée par les parois 2, 3 et 4 et inversée par rapport à la paroi supérieure 4. Elle comporte un flanc avant 11 et un flanc arrière 12, inclinés l'un par rapport à l'autre et reliés par une arête 13.

Ainsi, dans le statoréacteur des figures 1 à 3, entre les parois latérales 2 et 3:
- la chambre de combustion 14 est formée, en partie intermédiaire du corps 1, entre, d'une part, le flanc arrière 7 de la paroi supérieure 4 et, d'autre part, la partie du flanc avant 11 de la paroi inférieure 5, en regard dudit flanc arrière 7 ;
- l'entrée 15 de comburant (air) est formée, à l'une des extrémités du corps 1, entre le flanc avant 6 de la paroi supérieure 4 et la partie du flanc avant 11 de la paroi inférieure 5, en regard dudit flanc avant 6 ; et
- la tuyère d'échappement 16 est formée, à l'autre extrémité du corps 1, entre le flanc arrière 7 de la paroi supérieure 4 et le flanc arrière 12 de la paroi inférieure 5.

Par ailleurs, la paroi inférieure 5 du statoréacteur 1 est montée mobile, de façon non représentée, entre lesdites parois latérales 2 et 3 pour pouvoir permettre de faire varier de façon progressive la géométrie de la chambre de combustion 14, de l'entrée de comburant 15 et de la tuyère 16, afin d'adapter le statoréacteur aux conditions de vol de l'aéronef sur lequel il est monté et d'ainsi obtenir la performance maximale de celui-ci en ce qui concerne soit la poussée, soit l'impulsion spécifique.

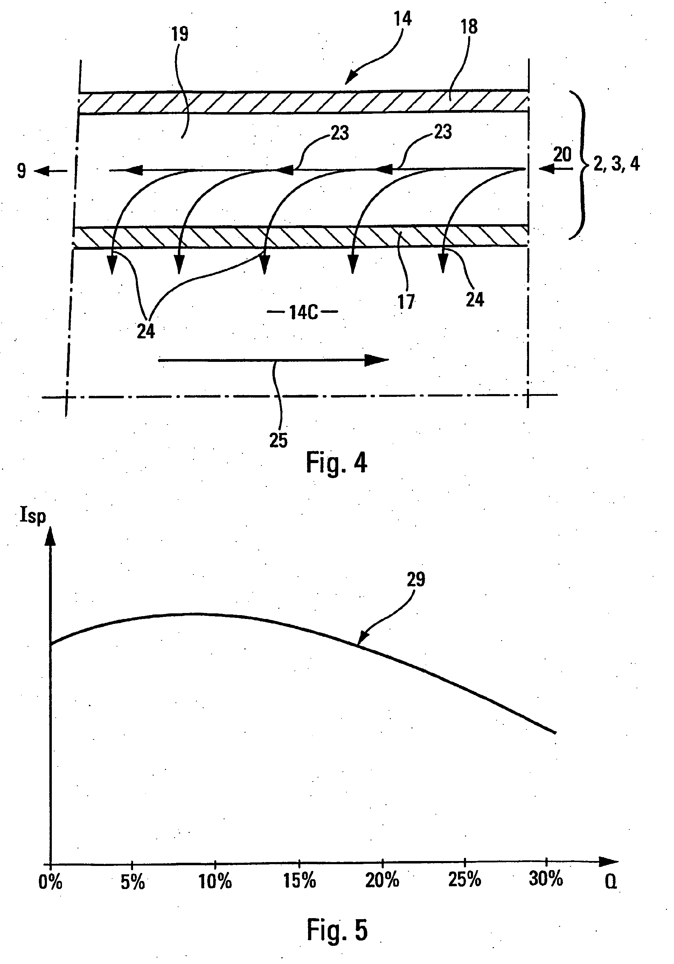

Comme cela est montré sur les figures 1 à 3 et illustré à plus grande échelle par la figure 4, la partie de la paroi supérieure 4 et/ou les parties des parois latérales 2 et 3 se trouvant en regard de la chambre de combustion 14 sont constituées d'une peau interne 17 de matériau composite thermostructural délimitant le coeur 14C de la chambre de combustion 14 et d'une peau externe 18, également de matériau composite thermostructural, espacée de ladite peau interne 17, en ménageant avec elle un espace intermédiaire 19. La peau externe 18 est rendue étanche aux gaz, tandis que la peau interne 17 possède une porosité intrinsèque.

Un collecteur 20, monté sur les parois 2, 3 et 4, est alimenté en combustible, comme cela est symbolisé par la flèche 21. Grâce à des orifices 22 prévus dans lesdites parois, le collecteur 20 peut à son tour introduire ledit combustible dans ledit espace intermédiaire 19, afin d'alimenter les injecteurs 9, reliés à ce dernier. Ainsi, lesdits injecteurs 9 sont alimentés en combustible à travers l'espace intermédiaire 19, comme cela est illustré par les flèches 23. Le combustible transitant à travers l'espace intermédiaire 19 en direction des injecteurs 9 refroidit lesdites parois 2, 3, 4. Il peut constituer la totalité ou seulement une partie du combustible adressé auxdits injecteurs.

Puisque ladite peau interne 17 est poreuse, une partie du combustible transitant à travers l'espace intermédiaire 19 en direction des injecteurs 9 (flèches 23) passe à travers ladite peau interne 17 pour pénétrer dans le coeur 14C de la chambre de combustion 14, comme cela est illustré par les flèches 24. Le combustible traversant la peau interne 17 écarte de cette dernière les gaz (flèche 25) résultant de la combustion du combustible injecté par les injecteurs 9 (flèche 26), en présence du flux de comburant (flèche 27), et éjectés à travers la tuyère 16 (flèche 28).

Sur la figure 5, on a reproduit la courbe 29 illustrant la variation de l'impulsion spécifique Isp (en m/s) du statoréacteur 1, pour une configuration particulière, en fonction de la proportion du débit de combustible traversant la peau interne poreuse 17 (flèches 24), rapportée au débit total de combustible Q apporté dudit statoréacteur. On peut y voir qu'il est avantageux que cette proportion soit supérieure à 5%, mais inférieure à 15%, par exemple de l'ordre de 10%.

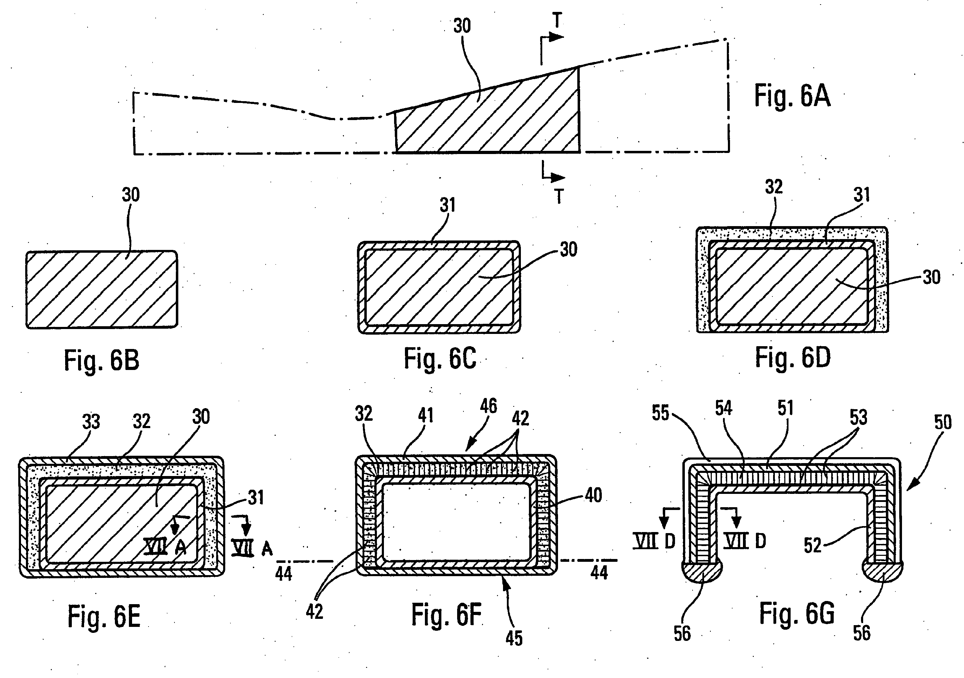

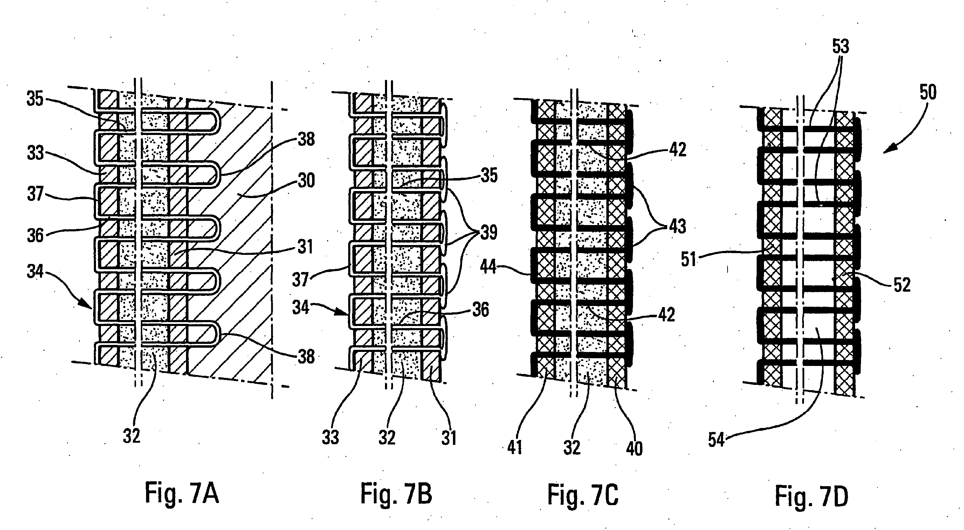

Les figures 6A à 6G et 7A à 7D illustrent schématiquement un mode de réalisation du statoréacteur conforme à la présente invention.

Pour ce faire, on commence par réaliser, par exemple en une matière synthétique mousse susceptible d'être piquée par une aiguille, un mandrin 30 (voir la figure 6A) présentant la forme intérieure de la chambre de combustion 14, c'est-à-dire celle de son coeur 14C. Puis, sur ce mandrin 30, on applique de toutes manières connues (bobinage, tissage, etc ...) une structure 31 de fibres à haute résistance, telles que des fibres à base de carbone, de silice ou de carbure de silicium, destinée à constituer une armature fibreuse pour ladite peau interne 17 (voir la figure 6C). Ensuite, sur les trois côtés de la structure fibreuse 31 correspondant aux parois 2, 3 et 4, on applique une âme 32, par exemple en une mousse de polystyrène, non imprégnable par les résines destinées à former les matrices de matière composite, et représentative de l'espace intermédiaire 19 (voir la figure 6D). La matière de l'âme 32 est susceptible d'être piquée par une aiguille et d'être éliminée thermiquement.

Sur l'âme 32, on applique une structure 33 de fibres à haute résistance (C, SiC, ...) destinée à constituer une armature fibreuse pour la peau externe 18 (voir la figure 6E).

Comme le montre à plus grande échelle la figure 7A, la structure fibreuse 31, l'âme annulaire 32 et la structure fibreuse 33 sont rendues solidaires les unes des autres par piquage sans nouage d'un fil continu 34, lui-même constitué d'une pluralité de fibres à haute résistance (C, SiC, ...). Le fil continu 34 forme des tronçons 35, 36 traversant les éléments 31, 32, 33 et reliés alternativement les uns aux autres par des ponts 37, appliqués sur la structure fibreuse 33, et par des boucles 38, pénétrant dans le mandrin 30.

Après cette opération de piquage, le mandrin 30 est éliminé et les boucles 38 sont rabattues et pressées contre la structure fibreuse 31 pour former des amas 39 (voir la figure 7B), puis l'ensemble des structures fibreuses 31 et 33 est imprégné par une résine durcissable, relativement peu visqueuse et éventuellement diluée, à l'alcool par exemple. L'imprégnation est réalisée de préférence sous dépression, de façon que ladite résine pénètre, non seulement dans les structures fibreuses 31 et 33, mais encore le long et dans les tronçons de fil traversants 35, 36. Au cours de cette imprégnation, l'âme 32 n'est pas imprégnée par la résine, puisqu'imperméable à celle-ci.

La résine imprégnée est ensuite durcie, par exemple par élévation de température, pendant une durée suffisante pour que les structures fibreuses 31 et 33 deviennent des peaux rigides 40 et 41, respectivement, et que les tronçons de fil traversants 35 et 36 deviennent des entretoises rigides filiformes 42 (voir la figure 7C). Ces entretoises 42 sont fortement ancrées à leurs extrémités dans les peaux rigides 40 et 41, grâce aux ancrages rigides 43 et 44 formés, respectivement, à partir des amas 39 et des ponts 37. A ce stade du procédé de fabrication, il est possible d'éliminer, par exemple par sciage le long de la ligne 44, la partie 45 ne comportant pas d'âme 32, pour ne garder que la partie 46 en forme de goulotte.

Pour former la matrice de l'ensemble des peaux rigides 40 et 41 et des entretoises 42, on soumet ladite goulotte 46 à une pyrolyse à température élevée, par exemple de l'ordre de 90O°C, ce qui stabilise la géométrie dudit ensemble et élimine l'âme 32. Eventuellement, cet ensemble peut être densifié et traité de manière connue pour que sa matrice devienne du type céramique. On obtient alors la pièce monolithique 50 (voir les figures 6G et 7D), destinée à former, au moins en partie, la chambre de combustion 14 et comportant :
- une peau externe 51 de matériau composite, issue de la peau 41 et destinée à former, au moins en partie, la paroi externe 18 de la chambre de combustion 14 ;
- une peau interne 52 de matériau composite, issue de la peau 40 et destinée à former la paroi interne 17 de la chambre de combustion 14 ; et
- une pluralité d'entretoises filiformes 53 de matériau composite, issues des entretoises 42.

Dans cette pièce monolithique 50, les peaux 51 et 52 sont espacées l'une de l'autre en délimitant un espace intermédiaire 54, traversé sans être obturé par les entretoises 53 et destiné à former l'espace intermédiaire 19 de la chambre de combustion 14.

On sait que, par nature, une matière composite est poreuse et que cette porosité dépend des conditions de formation de la matrice. On conçoit donc aisément que la porosité de la peau interne 52 peut être ajustée pour communiquer à cette dernière la porosité exigée de la paroi interne 17. Ce faisant, on communique à la peau externe 51 une porosité identique à celle désirée pour la peau interne 52. Or la paroi externe 18 devant être étanche, il peut être avantageux de revêtir extérieurement la peau externe 51 d'un revêtement d'étanchéité 55, comme cela est représenté sur la figure 6G.

De plus, en tant que de besoin, un cordon de matériau composite 56 est rapporté le long des bords de la pièce 50 correspondant à la ligne de sciage 44, pour obturer de façon étanche l'espace intermédiaire 54.

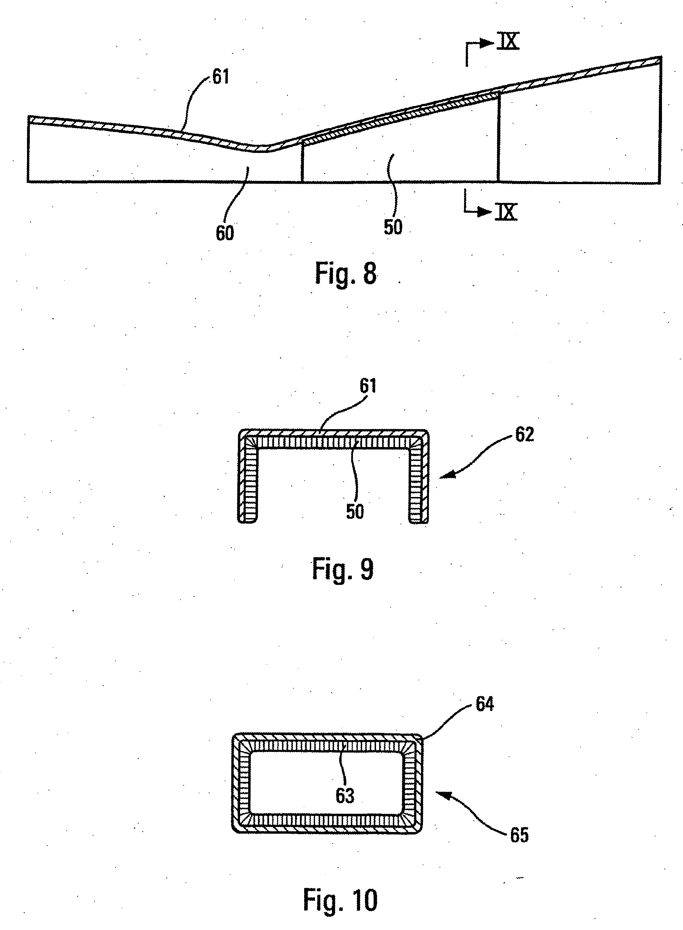

Pour obtenir le corps de statoréacteur 1 --à l'exclusion de la paroi 5 qui peut être fabriquée indépendamment-- on peut (voir les figures 8 et 9) placer la pièce 50 sur un mandrin 60 présentant la forme intérieure de l'ensemble des parois 2, 3 et 4 et déposer sur ledit mandrin 60 et sur ladite pièce 50 --par bobinage, tissage, ...-- une structure fibreuse qui, après imprégnation, polymérisation, pyrolyse, densification, etc ... devient une coque 61 en forme de goulotte et enchâssant la pièce 50. Ainsi, ces deux pièces 50 et 60 de matériau composite thermostructural forme une pièce 62 représentative de l'ensemble du corps allongé 1, à l'exception de la paroi 5.

Bien que, dans l'exemple décrit ci-dessus, on ait supposé que, dans le corps de statoréacteur 1, la paroi 5 était indépendante de la goulotte formée par les parois 2, 3, 4, il va de soi qu'un statoréacteur dans lequel la paroi 5 serait solidaire des parois 2, 3 et 4 peut être réalisé conformément à la présente invention. Dans ce cas (voir la figure 10), la pièce composite thermostructurale 63 représentative de la chambre de combustion 14 et correspondant à la pièce 50 ci-dessus, pourrait être prismatique fermée et serait enchâssée dans une enveloppe composite thermostructurale fermée 64, de forme prismatique fermée, --correspondant à la coque 61-- pour former une pièce composite thermostructurale 65 dont une des parois serait représentative de ladite paroi 5.

## Revendications

1. Statoréacteur ayant un corps allongé (1) comportant :
- à l'une des extrémités dudit corps, une entrée (15) pour un flux de comburant (27) ;
- en partie intermédiaire dudit corps, une chambre de combustion (14), qui est pourvue d'au moins un injecteur de combustible (9) et dans le coeur (14C) de laquelle sont effectués le mélange comburant-combustible et la combustion dudit mélange, la paroi (2,3, 4) de ladite chambre de combustion étant constituée au moins en partie par une peau interne (17) disposée du côté dudit coeur (14C) et par une peau externe (18) espacée de ladite peau interne (17) en ménageant avec elle un espace intermédiaire (19) et ledit combustible alimentant ledit injecteur (9) transitant, au moins en partie, par ledit espace intermédiaire (19) pour refroidir ladite paroi (2, 3, 4); et
- à l'autre extrémité dudit corps, une tuyère d'échappement (16) canalisant les gaz de combustion (28) sortant du coeur de ladite chambre de combustion,
**caractérisé en ce que**:
- ladite peau interne (17) est réalisée au moins en partie en un matériau composite thermostructural, qui est poreux pour ledit combustible traversant ledit espace intermédiaire (19) ; et
- la porosité de ladite peau interne (17) est réglée pour que la proportion dudit combustible traversant ladite peau interne soit comprise entre 5% et 15% de la quantité totale de combustible apportée audit statoréactueur.

2. Statoréacteur selon la revendication 1,
**caractérisé en ce que** ladite peau externe (18) est également constituée d'un matériau composite thermostructural.

3. Statoréacteur selon la revendication 2,
**caractérisé en ce que** ladite peau externe (18) de matériau composite thermostructural est rendue étanche aux liquides et aux gaz.

4. Statoréacteur selon l'une des revendications 2 ou 3,
**caractérisé en ce que** lesdites peaux interne (17) et externe (18) de matériau composite thermostructural sont reliées l'une à l'autre par une pluralité d'entretoises filiformes (53) de matériau composite thermostructural traversant ledit espace intermédiaire.

5. Statoréacteur selon l'une des revendications 1 à 4,
**caractérisé en ce que** ladite chambre de combustion est constituée d'une seule pièce (65), dans laquelle les parois sont toutes solidaires les unes des autres et forment une surface prismatique fermée.

6. Statoréacteur selon la revendication 4,
**caractérisé en ce que** ladite chambre de combustion comporte quatre parois deux à deux opposées, lui conférant une section fermée rectangulaire.

7. Statoréacteur selon l'une des revendications 1 à 4,
**caractérisé en ce que** ladite chambre de combustion est constituée de deux pièces, avec au moins l'une des parois (5) de ladite chambre de combustion mobile par rapport à l'ensemble (50) des autres qui sont solidaires les unes des autres.

8. Statoréacteur selon la revendication 7,
**caractérisé en ce que** ladite chambre de combustion comporte quatre parois deux à deux opposées, trois desdites parois étant solidaires les unes des autres en formant une goulotte à section en forme de U, tandis que la quatrième paroi est montée mobile à l'intérieur de ladite goulotte.

9. Statoréacteur selon l'une des revendications 2 à 8,
**caractérisé en ce que** lesdites extrémités dudit corps de statoréacteur (1), formant respectivement l'entrée du flux de comburant et la tuyère d'échappement des gaz de combustion, sont constituées de matériau composite thermostructural et sont solidarisées de ladite chambre de combustion.

10. Statoréacteur selon la revendication 9,
**caractérisé en ce que** lesdites extrémités dudit corps de statoréacteur ne forment qu'une seule pièce (61) de matériau composite thermostructural, dans laquelle est incorporée ladite chambre de combustion (50).

## Claims

1. A ramjet having an elongate body (1) comprising:
- at one of the ends of said body, an inlet (15) for a stream of oxidizer (27);
- at an intermediate part of said body, a combustion chamber (14) which is provided with at least one fuel injector (9) and in the heart (14C) of which the oxidizer and fuel mix and said mixture is burnt, the wall (2, 3, 4) of said combustion chamber consisting at least in part of an inner skin (17) arranged on the same side as said heart (14C) and an outer skin (18) spaced away from said inner skin (17) forming therewith an intermediate space (19) and said fuel supplying said injector (9) passing, at least in part, through said intermediate space (19) to cool said wall (2, 3, 4); and
- at the other end of said body, an exhaust jetpipe (16) ducting the combustion gases (28) leaving the heart of said combustion chamber,
**characterized in that**:
- said inner skin (17) is made at least in part of a thermostructural composite, which is porous to said fuel passing through said intermediate space (19); and
- the porosity of said inner skin (17) is set so that the proportion of said fuel passing through said inner skin is between 5% and 15% of the total amount of fuel supplied for said ramjet.

2. The ramjet as claimed in claim 1,
**characterized in that** said outer skin (18) is also made of a thermostructural composite.

3. The ramjet as claimed in claim 2,
**characterized in that** said outer skin (18) made of thermostructural composite is sealed against liquids and against gases.

4. The ramjet as claimed in one of claims 2 or 3,
**characterized in that** said inner (17) and outer (18) skins made of thermostructural composite are adjoined together by a plurality of threadlike spacers (53) of thermostructural composite passing across said intermediate space.

5. The ramjet as claimed in one of claims 1 to 4,
**characterized in that** said combustion chamber consists of a single piece (65) in which the walls are all joined together and form a closed prismatic surface.

6. The ramjet as claimed in claim 4,
**characterized in that** said combustion chamber has four walls in opposed pairs, giving it a closed rectangular cross section.

7. The ramjet as claimed in one of claims 1 to 4,
**characterized in that** said combustion chamber is made of two pieces, with at least one of the walls (5) of said combustion chamber able to move with respect to the collection (50) of the others which are joined together.

8. The ramjet as claimed in claim 7,
**characterized in that** said combustion chamber has four walls in opposed pairs, three of said walls being joined together to form a trough with a U-shaped cross section, while the fourth wall is mounted so that it can move inside said trough.

9. The ramjet as claimed in one of claims 2 to 8,
**characterized in that** said ends of said ramjet body (1), respectively forming the inlet for the stream of oxidizer and the jetpipe for exhausting the combustion gases, are made of thermostructural composite and are joined to said combustion chamber.

10. The ramjet as claimed in claim 9,
**characterized in that** said ends of said ramjet body form just one piece (61) of thermostructural composite, in which said combustion chamber (50) is incorporated.

## Patentansprüche

1. Staustrahltriebwerk mit einem länglichen Körper (1), umfassend:
- an einem der Enden des Körpers einen Einlass (15) für einen Verbrennungsstoffstrom (27);
- im mittleren Abschnitt des Körpers eine Brennkammer (14), die mit mindestens einer Brennstoffeinspritzdüse (9) versehen ist und in deren Kern (14C) die Mischung Verbrennungsstoff-Brennstoff und die Verbrennung dieser Mischung durchgeführt werden, wobei die Wand (2, 3, 4) der Brennkammer mindestens teilweise durch eine Innenhaut (17), die an der Seite des Kerns (14C) angeordnet ist, und durch eine Außenhaut (18) gebildet wird, die von der Innenhaut (17) beabstandet ist, so dass sie mit dieser einen Zwischenraum (19) bildet, und wobei der Brennstoff, der die Einspritzdüse (9) versorgt, mindestens teilweise durch den Zwischenraum (19) strömt, um die Wand (2, 3, 4) zu kühlen; und
- am anderen Ende des Körpers ein Strahlrohr (16), das die Verbrennungsgase (28) kanalisiert, die aus dem Kern der Brennkammer austreten,
**dadurch gekennzeichnet, dass**:
- die Innenhaut (17) mindestens teilweise aus einem thermostrukturellen Verbundwerkstoff gebildet ist, der für den Brennstoff, der durch den Zwischenraum (19) strömt, porös ist; und
- die Porosität der Innenhaut (17) so eingestellt ist, dass der Anteil des Brennstoffs, der die Innenhaut durchquert, zwischen 5 % und 15 % der Gesamtmenge des Brennstoffs beträgt, die dem Staustrahltriebwerk zugeführt wird.

2. Staustrahltriebwerk nach Anspruch 1, **dadurch gekennzeichnet, dass** die Außenhaut (18) ebenfalls aus einem thermostrukturellen Verbundwerkstoff gebildet ist.

3. Staustrahltriebwerk nach Anspruch 2, **dadurch gekennzeichnet, dass** die Außenhaut (18) aus thermostrukturellem Verbundwerkstoff gegenüber Flüssigkeiten und Gasen abgedichtet ist.

4. Staustrahltriebwerk nach einem der Ansprüche 2 oder 3, **dadurch gekennzeichnet, dass** die Innenhaut (17) und die Außenhaut (18) aus thermostrukturellem Verbundwerkstoff durch eine Vielzahl von fadenförmigen Querstreben (53) aus thermostrukturellem Verbundwerkstoff, die den Zwischenraum durchqueren, miteinander verbunden sind.

5. Staustrahltriebwerk nach einem der Ansprüche 1 bis 4, **dadurch gekennzeichnet, dass** die Brennkammer aus einem einzigen Teil (65) gebildet wird, in dem alle Wände miteinander fest verbunden sind und eine geschlossene prismatische Oberfläche bilden.

6. Staustrahltriebwerk nach Anspruch 4, **dadurch gekennzeichnet, dass** die Brennkammer vier Wände umfasst, von denen jeweils zwei einander gegenüberliegend angeordnet sind, wodurch ihr ein geschlossener rechteckiger Querschnitt verliehen wird.

7. Staustrahltriebwerk nach einem der Ansprüche 1 bis 4, **dadurch gekennzeichnet, dass** die Brennkammer aus zwei Teilen gebildet ist, wobei mindestens eine der Wände (5) der Brennkammer in Bezug auf die Gesamtheit (50) der anderen beweglich ist, die miteinander fest verbunden sind.

8. Staustrahltriebwerk nach Anspruch 7, **dadurch gekennzeichnet, dass** die Brennkammer vier Wände umfasst, von denen jeweils zwei einander gegenüberliegend angeordnet sind, wobei drei der Wände fest miteinander verbunden sind, indem sie eine Rinne mit U-förmigem Querschnitt bilden, während die vierte Wand beweglich im Inneren der Rinne montiert ist.

9. Staustrahltriebwerk nach einem der Ansprüche 2 bis 8, **dadurch gekennzeichnet, dass** die Enden des Körpers des Staustrahltriebwerks (1), die den Einlass für den Verbrennungsstoffstrom bzw. das Strahlrohr für die Verbrennungsgase bilden, aus thermostrukturellem Verbundwerkstoff gebildet und mit der Brennkammer fest verbunden sind.

10. Staustrahltriebwerk nach Anspruch 9, **dadurch gekennzeichnet, dass** die Enden des Körpers des Staustrahltriebwerks ein einziges Teil (61) aus thermostrukturellem Verbundwerkstoff bilden, in das die Brennkammer (50) integriert ist.
